# EUROPEAN PATENT APPLICATION

(11) **EP 3 998 309 A1**
(43) Date of publication of application: **18.05.2022**
(21) Application number: 20837361.3
(22) Date of filing: 29.06.2020
(51) Int. Cl.: C08L 33/14, C08G 65/328, C08L 71/00

(54) **CURABLE COMPOSITION AND CURED PRODUCT**

(30) Priority: 10.07.2019 JP 2019128595
(71) Applicant: Soken Chemical & Engineering Co., Ltd., Toshima-ku Tokyo 171-8531 (JP)
(72) Inventor: GOTO, Shu-ichi, Sayama-shi, Saitama 350-1320 (JP); SHIMIZU, Seiichi, Sayama-shi, Saitama 350-1320 (JP)
(74) Representative: Dehns
(86) International application number: PCT/JP2020/025453
(87) International publication number: WO 2021/006088

(57) **Abstract**

Provided is a curable composition which can form a cured product having good balance between mechanical properties, such as elongation at break and breaking strength, and weatherability, and which has excellent storage stability. A curable composition contains a (meth)acrylic polymer (A) which is a polymer of starting components including a polymerizable monomer containing 20% by mass or more of a (meth)acrylic acid alkyl ester (a1) having an alkyl group with 8 to 12 carbon atoms, and a mercapto group-containing compound (a10) having a group represented by a specific formula (1) in an amount of 0.1 to 5 parts by mass relative to 100 parts by mass of the polymerizable monomer; and a polymer (B) having a group represented by a specific formula (2) and having a polyether skeleton in the main chain thereof.

## Description

### Technical Field

The present invention relates to a curable composition and a cured product.

### Background Art

Curable compositions containing an oxyalkylene polymer having a reactive silicon group such as an alkoxysilyl group are known as a composition that is cured by moisture present in the atmosphere or in an adherend (for example, refer to Patent Literature 1 and Patent Literature 2).

### Citation List

### Patent Literature

PTL 1: JPA 2002-194204
PTL 2: JPA 2014-101499

### Summary of Invention

### Technical Problem

According to studies by the present inventors, it has been found that a cured product obtained from a curable composition containing an oxyalkylene polymer having a reactive silicon group has excellent mechanical properties such as elongation at break and breaking strength, but has a problem with weatherability.

In order to improve the weatherability problem, it is effective to employ a method of using a curable composition in which an oxyalkylene polymer having a reactive silicon group and a (meth)acrylic polymer having a reactive silicon group are mixed. However, while this method can improve the weatherability problem, it cannot escape deterioration of physical property values such as elongation at break and breaking strength. Furthermore, the oxyalkylene polymer having a reactive silicon group and the (meth)acrylic polymer having a reactive silicon group have poor compatibility with each other, and phase separation occurs over time, resulting in poor storage stability.

An object of the present invention is to provide a curable composition which can form a cured product having good balance between mechanical properties, such as elongation at break and breaking strength, and weatherability, and which has excellent storage stability, and a cured product obtained from the curable composition.

### Solution to Problem

The present invention for example relates to the following items [1] to [5].
[1] A curable composition containing a (meth)acrylic polymer (A) which is a polymer of starting components including a polymerizable monomer containing 20% by mass or more of a (meth)acrylic acid alkyl ester (a1) having an alkyl group with 8 to 12 carbon atoms, and a mercapto group-containing compound (a10) having a group represented by the formula (1) below in an amount of 0.1 to 5 parts by mass relative to 100 parts by mass of the polymerizable monomer; and a polymer (B) having a group represented by the formula (2) below and having a polyether skeleton in the main chain thereof:

   Formula (1): -SiR¹₃

   [in the formula (1), R¹ is each independently an alkyl group with 1 to 20 carbon atoms, alkoxy group with 1 to 20 carbon atoms, or hydroxyl group, and at least one R¹ is the alkoxy group or hydroxyl group], and

   Formula (2): -W-R^{B}-SiR²₃

   [in the formula (2), R² is each independently an alkyl group with 1 to 20 carbon atoms, alkoxy group with 1 to 20 carbon atoms, or hydroxyl group, and at least one R² is the alkoxy group or hydroxyl group; R^{B} is an alkanediyl group with 1 to 4 carbon atoms; W is a divalent group represented by -O-CO-NH- or -N(R³)-CO-N(R⁴) -; R³ and R⁴ are each a hydrogen atom, hydrocarbon group, or halogenated hydrocarbon group, and R³ and R⁴ may be the same or different].
[2] The curable composition according to item [1], in which the polymerizable monomer in the (meth)acrylic polymer (A) contains 20 to 99% by mass of the (meth)acrylic acid alkyl ester (a1) and 0.01 to 10% by mass of a (meth)acryloyl group-containing compound (a2) having a group represented by the formula (1).
[3] The curable composition according to item [1] or [2], in which the (meth)acrylic polymer (A) has a number average molecular weight (Mn) of 10,000 to 50,000 and a glass transition temperature (Tg) of -20°C or lower.
[4] The curable composition according to any one of items [1] to [3], in which the curable composition contains the polymer (B) in an amount of 40 to 250 parts by mass relative to 100 parts by mass of the (meth)acrylic polymer (A) .
[5] A cured product obtained from the curable composition according to any one of items [1] to [4]. Advantageous Effects of Invention

According to the present invention, it is possible to provide a curable composition which can form a cured product having good balance between mechanical properties, such as elongation at break and breaking strength, and weatherability, and which has excellent storage stability, and a cured product obtained from the curable composition. Description of Embodiments

The present invention will be specifically described below.

A curable composition of the present invention (hereinafter, may be also referred to as the "composition of the present invention") contains a (meth)acrylic polymer (A) and a polymer (B) having a polyether skeleton in the main chain thereof, which will be described below.

In the present description, (meth)acrylic is used as a general name of acrylic and methacrylic and may be acrylic or methacrylic, and (meth)acrylate is used as a general name of acrylate and methacrylate and may be acrylate or methacrylate.

### [(Meth)acrylic polymer (A)]

The (meth)acrylic polymer (A) (hereinafter, may also be referred to as the "polymer (A)") is a polymer of starting components including a polymerizable monomer containing 20% by mass or more of a (meth)acrylic acid alkyl ester (a1) having an alkyl group with 8 to 12 carbon atoms, and a mercapto group-containing compound (a10) having a group represented by the formula (1) which will be described later in an amount of 0.1 to 5 parts by mass relative to 100 parts by mass of the polymerizable monomer.

### <Starting components >

The starting components of the polymer (A) include the polymerizable monomer which is a monomer having a polymerizable double bond, and a mercapto group-containing compound (a10) having a group represented by the formula (1) which will be described later. Usually, the starting components further include a polymerization initiator.

### <<(Meth)acrylic acid alkyl ester (a1)>>

The polymerizable monomer contains a (meth)acrylic acid alkyl ester (a1) (hereinafter, may also be referred to as the "monomer (a1)") having an alkyl group with 8 to 12 carbon atoms. That is, the polymer (A) has a structural unit derived from the monomer (a1).

The alkyl group may be linear or branched.

The monomer (a1) is usually a compound represented by CH₂=C(R^{a})-COO-R^{b}. Here, R^{a} is a hydrogen atom or methyl group, and R^{b} is an alkyl group with 8 to 12 carbon atoms.

Examples of the monomer (a1) include 2-ethylhexyl (meth)acrylate, n-octyl (meth)acrylate, isooctyl (meth)acrylate, isononyl (meth)acrylate, n-decyl (meth)acrylate, isodecyl (meth)acrylate, and lauryl (meth)acrylate.

One or two or more monomers (a1) can be used.

The proportion of the monomer (a1) in the polymerizable monomer is 20% by mass or more, preferably 20 to 99% by mass, more preferably 22 to 90% by mass, and still more preferably 22 to 78% by mass. The polymer (A) can have a structural unit derived from the monomer (a1) in the same range within the entire structural unit. By using the (meth)acrylic acid alkyl ester (a1) having an alkyl group with 8 to 12 carbon atoms in the range described above, it is possible to obtain a (meth)acrylic polymer having excellent compatibility with the polymer (B), a viscosity that is not too high, and excellent handleability.

### <<(Meth)acryloyl group-containing compound (a2)>>

From the viewpoint of moisture curability, preferably, the polymerizable monomer further contains a (meth)acryloyl group-containing compound (a2) (hereinafter, may also be referred to as the "monomer (a2)") having a group represented by the formula (1). That is, preferably, the polymer (A) further has a structural unit derived from the monomer (a2).

Formula (1): -SiR¹₃

In the formula (1), R¹ is each independently an alkyl group with 1 to 20 carbon atoms, alkoxy group with 1 to 20 carbon atoms, or hydroxyl group, and at least one R¹ is the alkoxy group or hydroxyl group.

Examples of the alkyl group with 1 to 20 carbon atoms include a methyl group, an ethyl group, an n-propyl group, an isopropyl group, an n-butyl group, an isobutyl group, a sec-butyl group, a tert-butyl group, a pentyl group, a hexyl group, a 2-ethylhexyl group, an octyl group, and a decyl group. An alkyl group with 1 to 10 carbon atoms is preferable, and an alkyl group with 1 to 3 carbon atoms is more preferable. The alkyl group may be linear or branched.

Examples of the alkoxy group with 1 to 20 carbon atoms include a methoxy group, an ethoxy group, a propoxy group, an isopropoxy group, a butoxy group, an isobutoxy group, a pentyloxy group, an isopentyloxy group, and a hexyloxy group. An alkoxy group with 1 to 10 carbon atoms is preferable, and an alkoxy group with 1 to 3 carbon atoms is more preferable. The alkoxy group may be linear or branched.

Examples of the group represented by the formula (1) include a dimethylmethoxysilyl group, a dimethylethoxysilyl group, a methyldimethoxysilyl group, a methyldiethoxysilyl group, a trimethoxysilyl group, and a triethoxysilyl group.

As the monomer (a2), a compound represented by the formula (a2-1) below is preferable. 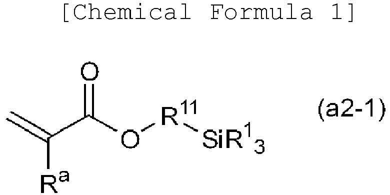 In the formula (a2-1), R^{a} is a hydrogen atom or methyl group, R¹ has the same meaning as R¹ in the formula (1), and R¹¹ is an alkanediyl group, divalent group represented by-R¹²-OCONH-R¹²-, or divalent group represented by -R¹²-N(R^{c})-CONH-R¹²-. Here, R¹² is each independently an alkanediyl group, and R^{c} is a hydrogen atom, hydrocarbon group, or halogenated hydrocarbon group.

The alkanediyl group is an alkanediyl group preferably with 1 to 10 carbon atoms, and more preferably with 1 to 5 carbon atoms, and examples thereof include a methylene group, an ethanediyl group, a propanediyl group, and a butanediyl group.

Examples of the hydrocarbon group in R^{c} include alkyl groups with 1 to 18 carbon atoms, preferably with 1 to 3 carbon atoms, such as a methyl group, an ethyl group, an n-propyl group, an isopropyl group, an n-butyl group, a sec-butyl group, a tert-butyl group, a 2-ethylhexyl group, and an n-octyl group; cycloalkyl groups with 3 to 18 carbon atoms, preferably with 5 to 8 carbon atoms, such as a cyclopentyl group and a cyclohexyl group; alkenyl group with 2 to 18 carbon atoms, preferably with 2 to 5 carbon atoms, such as a vinyl group, an allyl group, a 3-butenyl group, and a 5-hexenyl group; and aryl groups with 6 to 18 carbon atoms, preferably with 6 to 10 carbon atoms, such as a phenyl group, a naphthyl group, and an anthryl group.

The halogenated hydrocarbon group in R^{c} is a group in which at least a part of hydrogen atoms constituting the hydrocarbon group is substituted by a halogen atom. Examples of the halogen atom include a fluorine atom, a chlorine atom, a bromine atom, and an iodine atom.

R^{c} is preferably a hydrogen atom or hydrocarbon group, and more preferably a hydrocarbon group.

Examples of the compound represented by the formula (a2-1) include (meth)acryloxymethyldimethylmethoxysilane, (meth)acryloxymethyldimethylethoxysilane, (meth)acryloxymethylmethyldimethoxysilane, (meth)acryloxymethylmethyldiethoxysilane, (meth)acryloxymethyltrimethoxysilane, (meth)acryloxymethyltriethoxysilane, 3-(meth)acryloxypropyldimethylmethoxysilane, 3-(meth)acryloxypropyldimethylethoxysilane, 3-(meth)acryloxypropylmethyldimethoxysilane, 3-(meth)acryloxypropylmethyldiethoxysilane, 3-(meth)acryloxypropyltrimethoxysilane, and 3-(meth)acryloxypropyltriethoxysilane.

The compound represented by the formula (a2-1) may be for example a compound obtained by adding the isocyanate group of a compound represented by OCN-R¹²-SiR¹₃ (R¹² and R¹ have the same meaning as the same symbols described in the formula (a2-1)) to the hydroxyl group of a hydroxyalkyl (meth)acrylate, such as 2-hydroxyethyl (meth)acrylate or 4-hydroxybutyl (meth)acrylate, or the amino group of an aminoalkyl (meth)acrylate, such as 2-aminoethyl (meth)acrylate. Specific examples of the compound represented by OCN-R¹²-SiR¹₃ include compounds exemplified as the compound represented by OCN-R^{B}-SiR²₃, which will be described later.

One or two or more monomers (a2) can be used.

The proportion of the monomer (a2) in the polymerizable monomer is preferably 0.01 to 10% by mass, and more preferably 0.1 to 5% by mass. The polymer (A) can have a structural unit derived from the monomer (a2) in the same range within the entire structural unit. By using the monomer (a2) in the range described above, the group represented by the formula (1) can be introduced into the polymer (A), and accordingly, the resulting polymer (A) can have appropriate crosslinkability, which is suitable for use in forming a crosslinked product.

### <<Another monomer (a3)>>

The polymerizable monomer can further contain another monomer (a3) copolymerizable with the monomer (a1) and/or the monomer (a2) within the range not impairing the object of the present invention. That is, the polymer (A) can further have a structural unit derived from the other monomer (a3).

Examples of the other monomer (a3) include:
(meth)acrylic acid alkyl esters other than the monomer (al);
(meth)acrylates containing an alicyclic hydrocarbon group or aromatic hydrocarbon group, such as cyclohexyl (meth)acrylate, isobornyl (meth)acrylate, benzyl (meth)acrylate, and phenyl (meth)acrylate;
alkoxyalkyl (meth)acrylates, such as methoxymethyl (meth)acrylate, 2-methoxyethyl (meth)acrylate, 2-ethoxyethyl (meth)acrylate, 3-methoxypropyl (meth)acrylate, 3-ethoxypropyl (meth)acrylate, 4-methoxybutyl (meth)acrylate, and 4-ethoxybutyl (meth)acrylate;
polyalkylene glycol (meth)acrylates, such as methoxypolyethylene glycol mono(meth)acrylate, ethoxypolyethylene glycol mono(meth)acrylate, octoxypolyethylene glycol mono(meth)acrylate, lauroxypolyethylene glycol mono(meth)acrylate, stearoxypolyethylene glycol mono(meth)acrylate, polyethylene glycol mono(meth)acrylate, and polypropylene glycol mono(meth)acrylate;
hydroxyalkyl (meth)acrylates, such as 2-hydroxyethyl (meth)acrylate, 2-hydroxypropyl (meth)acrylate, and 4-hydroxybutyl (meth)acrylate;
(meth)acrylic acid, itaconic acid, crotonic acid, fumaric acid, and maleic acid;
carboxyl group-containing monomers, such as carboxyl group-containing (meth)acrylates, e.g., beta-carboxyethyl (meth)acrylate, 5-carboxypentyl (meth)acrylate, succinic acid mono(meth)acryloyloxyethyl ester, and omega-carboxyl polycaprolactone mono(meth)acrylate;
acid anhydride group-containing monomers, such as phthalic anhydride and maleic anhydride;
dialkylaminoalkyl (meth)acrylates, such as 2-dimethylaminoethyl (meth)acrylate and 2-diethylaminoethyl (meth)acrylate;
amide group-containing monomers, such as (meth)acrylamide; N-alkyl (meth)acrylamides, e.g., N-methyl (meth)acrylamide, N-ethyl (meth)acrylamide, N-propyl (meth)acrylamide, and N-hexyl (meth)acrylamide; and N,N-dialkyl (meth)acrylamides, e.g., N,N-dimethyl (meth)acrylamide and N,N-diethyl (meth)acrylamide;
cyano group-containing monomers, such as (meth)acrylonitrile;
nitrogen heterocycle-containing monomers, such as N-vinylpyrrolidone, N-vinylmorpholine, N-vinylcaprolactam, (meth)acryloylmorpholine, N-cyclohexylmaleimide, N-phenylmaleimide, N-laurylmaleimide, and N-benzylmaleimide;
styrene derivatives, such as styrene, alphamethylstyrene, p-methylstyrene, p-chlorostyrene, p-chloromethylstyrene, p-methoxystyrene, p-tert-butoxystyrene, divinylbenzene, and indene;
vinyl ester compounds, such as vinyl acetate, vinyl propionate, vinyl butyrate, vinyl caproate, vinyl benzoate, and vinyl cinnamate; and
vinyl ether compounds, such as n-propyl vinyl ether, n-butyl vinyl ether, isobutyl vinyl ether, tert-butyl vinyl ether, tert-amyl vinyl ether, cyclohexyl vinyl ether, 2-ethylhexyl vinyl ether, dodecyl vinyl ether, octadecyl vinyl ether, 2-chloroethyl vinyl ether, ethylene glycol butyl vinyl ether, triethylene glycol methyl vinyl ether, (4-vinyloxy)butyl benzoate, ethylene glycol divinyl ether, diethylene glycol divinyl ether, triethylene glycol divinyl ether, tetraethylene glycol divinyl ether, butane-1,4-diol-divinyl ether, hexane-1,6-diol-divinyl ether, cyclohexane-1,4-dimethanol-divinyl ether, di(4-vinyloxy)butyl isophthalate, di(4-vinyloxy)butyl glutarate, succinic acid di(4-vinyloxy)butyl trimethylolpropane trivinyl ether, 2-hydroxyethyl vinyl ether, 4-hydroxybutyl vinyl ether, 6-hydroxyhexyl vinyl ether, cyclohexane-1,4-dimethanol-monovinyl ether, diethylene glycol monovinyl ether, 3-aminopropyl vinyl ether, 2-(N,N-diethylamino)ethyl vinyl ether, urethane vinyl ether, and polyester vinyl ether.

The (meth)acrylic acid alkyl ester other than the (meth)acrylic acid alkyl ester (a1) (monomer (a1)) having an alkyl group with 8 to 12 carbon atoms may be for example a (meth)acrylic acid alkyl ester having an alkyl group usually with 1 to 7 or 13 to 30 carbon atoms, preferably with 2 to 7 or 13 to 25 carbon atoms, more preferably with 3 to 7 or 13 to 18 carbon atoms. Specific examples thereof include methyl (meth)acrylate, ethyl (meth)acrylate, propyl (meth)acrylate, n-butyl (meth)acrylate, iso-butyl (meth)acrylate, tert-butyl (meth)acrylate, tetradecyl (meth)acrylate, hexadecyl (meth)acrylate, stearyl (meth)acrylate, and isostearyl (meth)acrylate. The alkyl group may be linear or branched.

Among the other monomers (a3), (meth)acrylic acid alkyl esters other than the monomer (a1) and polyalkylene glycol (meth)acrylates are preferable, and (meth)acrylic acid alkyl esters other than the monomer (a1) are more preferable.

One or two or more other monomers (a3) can be used.

The proportion of the other monomer (a3) in the polymerizable monomer is preferably 1 to 75% by mass, and more preferably 20 to 70% by mass. The polymer (A) can have a structural unit derived from the other monomer (a3) in the same range within the entire structural unit.

### <<Mercapto group-containing compound (a10)>>

The starting components of the polymer (A) include a mercapto group-containing compound (a10) having a group represented by the formula (1) described above. The mercapto group-containing compound (a10) is a compound that contains a group represented by the formula (1) described above and a mercapto group and does not have a polymerizable double bond. The mercapto group-containing compound (a10) has a functional group (-SH) having high chain transfer ability in radical polymerization and therefore serves as a chain transfer agent. When the polymerizable monomer is polymerized in the presence of the mercapto group-containing compound (a10), a structural unit derived from the mercapto group-containing compound (a10), in particular, a group represented by the formula (1), can be introduced into a molecular chain end. A curable composition in which a polymer (A) having a group represented by the formula (1) at a molecular chain end thereof is excellent in terms of curing rate and mechanical properties.

Note that in the case where the (meth)acryloyl group-containing compound (a2) is used, the group represented by the formula (1) in the (meth)acryloyl group-containing compound (a2) and the group represented by the formula (1) in the mercapto group-containing compound (a10) may be the same or different.

As the mercapto group-containing compound (a10), a compound represented by the formula (a10-1) below is preferable.

Formula (a10-1): HS-R¹³-SiR¹₃

In the formula (a10-1), R¹ has the same meaning as R¹ in the formula (1), R¹³ is an alkanediyl group usually with 1 to 10 carbon atoms, preferably with 1 to 5 carbon atoms, and examples thereof include a methylene group, an ethanediyl group, a propanediyl group, and a butanediyl group.

Examples of the mercapto group-containing compound (a10) include mercaptomethyldimethylmethoxysilane, mercaptomethyldimethylethoxysilane, mercaptomethylmethyldimethoxysilane, mercaptomethylmethyldiethoxysilane, mercaptomethyltrimethoxysilane, mercaptomethyltriethoxysilane, 3-mercaptopropyltrimethoxysilane, 3-mercaptopropylmethyldimethoxysilane, and 4-mercaptobutylmethyldimethoxysilane. Among these, 3-mercaptopropylmethyldimethoxysilane is preferable.

One or two or more mercapto group-containing compounds (a10) can be used.

In the starting components of the polymer (A), the mercapto group-containing compound (a10) is used in an amount of 0.1 to 5 parts by mass, preferably 0.5 to 2 parts by mass, relative to 100 parts by mass of the polymerizable monomer. In such an embodiment, it is possible to adjust the number average molecular weight of the polymer (A) in an appropriate range.

### <<Polymerization initiator>>

The starting components of the polymer (A) usually include a polymerization initiator.

As the polymerization initiator, for example, an azo compound-based polymerization initiator or peroxide-based polymerization initiator may be used, and an azo compound-based polymerization initiator is preferable. Note that it is preferable not to use a metal catalyst. A polymer (A) produced using such a polymerization initiator has proper flowability and exhibits excellent workability, for example, when applied to a sealing material. Furthermore, since the polymer (A) does not contain a metal component derived from a catalyst, it is possible, for example, to improve inhibition of crosslinking reaction and coloration.

Examples of the azo compound-based polymerization initiator include 2,2'-azobisisobutyronitrile, 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2-phenylazo-4-methoxy-2,4-dimethylvaleronitrile, 2,2'-azobis(2-amidinopropane)dihydrochloride, 2,2'-azobis(N,N'-dimethyleneisobutylamidine), 2,2'-azobis[2-methyl-N-(2-hydroxyethyl)-propionamide], 2,2'-azobis(isobutylamide)dihydrate, 4,4'-azobis(4-cyanopentanoic acid), 2,2'-azobis(2-cyanopropanol), dimethyl-2,2'-azobis(2-methylpropionate), and 2,2'-azobis[2-methyl-N-(2-hydroxyethyl)propionamide].

Examples of the peroxide-based polymerization initiator include tert-butyl hydroperoxide, cumene hydroxide, dicumyl peroxide, benzoyl peroxide, lauroyl peroxide, caproyl peroxide, di-i-propyl peroxydicarbonate, di-2-ethylhexyl peroxydicarbonate, tert-butyl peroxybivalate, 2,2-bis(4,4-di-tert-butyl peroxycyclohexyl)propane, 2,2-bis(4,4-di-tert-amyl peroxycyclohexyl)propane, 2,2-bis(4,4-di-tert-octyl peroxycyclohexyl)propane, 2,2-bis(4,4-di-alpha-cumyl peroxycyclohexyl)propane, 2,2-bis(4,4-di-tert-butyl peroxycyclohexyl)butane, and 2,2-bis(4,4-di-tert-octyl peroxycyclohexyl)butane.

One or two or more polymerization initiators can be used.

The polymerization initiator may be used by being added successively a plurality of times.

The amount of use of the polymerization initiator is usually 0.001 to 2 parts by mass, preferably 0.002 to 1 part by mass relative to 100 parts by mass of the polymerizable monomer. By using the polymerization initiator in the range described above, it is possible to adjust the number average molecular weight of the polymer (A) in an appropriate range.

### <Properties of polymer (A)>

The number average molecular weight (Mn) of the polymer (A) is usually 10,000 to 50,000, and preferably 20,000 to 40,000. In one embodiment, the Mn is 20,000 or more, preferably 21,000 or more, and more preferably 22,000 or more. The number average molecular weight satisfying such a condition is preferable from the viewpoint that the polymer (A) has proper viscosity, excellent handleability, and excellent compatibility with the polymer (B), and the resulting cured product has excellent mechanical properties. The number average molecular weight (Mn) is measured by a gel permeation chromatography (GPC) method.

The glass transition temperature (Tg) of the polymer (A) is usually -20°C or lower, preferably -80 to -25°C, and more preferably -75 to -30°C. Such an embodiment is preferable from the viewpoint of imparting flexibility. The Tg is determined by differential scanning calorimetry (DSC).

The details of measurement conditions for GPC and DSC will be described later in Examples.

The viscosity of the polymer (A) at a number of revolutions of 1 rpm measured, under the condition of a liquid temperature of 25°C, using a type E viscometer is usually 400 Pa·s or less, and preferably 300 Pa·s or less. The lower limit value of the viscosity is not particularly limited, but is 5 Pa·s in one embodiment.

The polymer (A) preferably has 0.1 to 10 groups represented by the formula (1) in average in one molecule, and more preferably has 1 to 3 groups. The number of groups represented by the formula (1) can be calculated, for example, by analysis based on ¹H-NMR. The group represented by the formula (1) is, for example, derived from a mercapto group-containing compound (a10) and a monomer (a2).

### <Production of polymer (A)>

As a method for producing the polymer (A), although any method capable of polymerizing the polymerizable monomer can be employed, it is preferable to produce the polymer (A) by bulk polymerization or solution polymerization. For example, a polymerizable monomer and a mercapto group-containing compound (a10) are charged into a reaction vessel, a polymerization initiator added thereto, and a reaction is carried out at a reaction temperature of about 50 to 90°C for 2 to 20 hours. In the reaction, as necessary, a polymerization solvent may be charged. For example, polymerization is carried out in an inert gas atmosphere such as nitrogen gas. Furthermore, during the polymerization reaction, the polymerizable monomer, the polymerization initiator, a chain transfer agent, and the polymerization solvent may be further added appropriately.

As the polymerization solvent, an organic solvent is preferable. Examples of the organic solvent include aromatic hydrocarbons, such as benzene, toluene, and xylene; aliphatic hydrocarbons, such as n-pentane, n-hexane, n-heptane, and n-octane; alicyclic hydrocarbons, such as cyclopentane, cyclohexane, cycloheptane, and cyclooctane; ethers, such as diethyl ether, diisopropyl ether, 1,2-dimethoxyethane, dibutyl ether, tetrahydrofuran, dioxane, anisole, phenyl ethyl ether, and diphenyl ether; halogenated hydrocarbons, such as chloroform, carbon tetrachloride, 1,2-dichloroethane, and chlorobenzene; esters, such as ethyl acetate, propyl acetate, butyl acetate, and methyl propionate; ketones, such as acetone, acetylacetone, methyl ethyl ketone, diethyl ketone, methyl isobutyl ketone, and cyclohexanone; amides, such as N,N-dimethylformamide, N,N-dimethylacetamide, and N-methylpyrrolidone; nitriles, such as acetonitrile and benzonitrile; and sulfoxides, such as dimethyl sulfoxide and sulfolane.

One or two or more polymerization solvents can be used.

### <Content of polymer (A)>

The composition of the present invention can contain one or two or more polymers (A).

The composition of the present invention contains preferably 10% by mass or more, more preferably 15 to 80% by mass, still more preferably 20 to 60% by mass of the polymer (A) and the polymer (B) in total.

### [Polymer (B)]

The polymer (B) has a group represented by the formula (2) below.

### Formula (2): -W-R^{B}-SiR²₃

In the formula (2), R² is each independently an alkyl group with 1 to 20 carbon atoms, alkoxy group with 1 to 20 carbon atoms, or hydroxyl group, and at least one R² is the alkoxy group or hydroxyl group; R^{B} is an alkanediyl group with 1 to 4 carbon atoms; W is a divalent group represented by -O-CO-NH- or -N(R³)-CO-N(R⁴)-; R³ and R⁴ are each a hydrogen atom, hydrocarbon group, or halogenated hydrocarbon group, and R³ and R⁴ may be the same or different.

Examples of the alkyl group with 1 to 20 carbon atoms in R² include a methyl group, an ethyl group, an n-propyl group, an isopropyl group, an n-butyl group, an isobutyl group, a sec-butyl group, a tert-butyl group, a pentyl group, a hexyl group, a 2-ethylhexyl group, an octyl group, and a decyl group. An alkyl group with 1 to 10 carbon atoms is preferable, and an alkyl group with 1 to 3 carbon atoms is more preferable. The alkyl group may be linear or branched.

Examples of the alkoxy group with 1 to 20 carbon atoms in R² include a methoxy group, an ethoxy group, a propoxy group, an isopropoxy group, a butoxy group, an isobutoxy group, a pentyloxy group, an isopentyloxy group, and a hexyloxy group. An alkoxy group with 1 to 10 carbon atoms is preferable, and an alkoxy group with 1 to 3 carbon atoms is more preferable. The alkoxy group may be linear or branched.

Examples of the group represented by -SiR²₃ in the formula (2) include a dimethylmethoxysilyl group, a dimethylethoxysilyl group, a methyldimethoxysilyl group, a methyldiethoxysilyl group, a trimethoxysilyl group, and a triethoxysilyl group.

Examples of the alkanediyl group with 1 to 4 carbon atoms in R^{B} include a methanediyl group, an ethane-1,2-diyl group, a propane-1,3-diyl group, a butane-1,4-diyl group, and an isopropyl methanediyl group (-CH(CH(CH₃)₂)-).

Examples of the hydrocarbon group in R³ and R⁴ include alkyl groups with 1 to 18 carbon atoms, preferably with 1 to 3 carbon atoms, such as a methyl group, an ethyl group, an n-propyl group, an isopropyl group, an n-butyl group, a sec-butyl group, a tert-butyl group, a 2-ethylhexyl group, and an n-octyl group; cycloalkyl groups with 3 to 18 carbon atoms, preferably with 5 to 8 carbon atoms, such as a cyclopentyl group and a cyclohexyl group; alkenyl group with 2 to 18 carbon atoms, preferably with 2 to 5 carbon atoms, such as a vinyl group, an allyl group, a 3-butenyl group, and a 5-hexenyl group; and aryl groups with 6 to 18 carbon atoms, preferably with 6 to 10 carbon atoms, such as a phenyl group, a naphthyl group, and an anthryl group.

The halogenated hydrocarbon group in R³ and R⁴ is a group in which at least a part of hydrogen atoms constituting the hydrocarbon group is substituted by a halogen atom. Examples of the halogen atom include a fluorine atom, a chlorine atom, a bromine atom, and an iodine atom.

R³ and R⁴ are each preferably a hydrogen atom or hydrocarbon group.

W is preferably a divalent group represented by -O-CO-NH-.

The polymer (B) preferably has 1 to 10 groups represented by the formula (2) in average in one molecule, and more preferably has 1 to 5 groups.

The polymer (B) has a polyether skeleton in the main chain thereof. That is, the polymer (B) has a polyether skeleton as a main chain skeleton. The polyether skeleton is preferably a polyoxyalkylene skeleton. Examples thereof include a polyoxyethylene skeleton, a polyoxypropylene skeleton, a polyoxybutylene skeleton, a polyoxytetramethylene skeleton, a polyoxyethylene-polyoxypropylene skeleton, and a polyoxypropylene-polyoxybutylene skeleton, and a polyoxypropylene skeleton is preferable. The polyoxyalkylene skeleton may be composed of one repeating unit or two or more repeating units. Here, the repeating unit is an oxyalkylene unit. The polymer (B) may have a urethane skeleton between polyether skeletons.

The number average molecular weight (Mn) of the polymer (B) is usually 2,000 to 100,000, and preferably 5,000 to 60,000. The number average molecular weight satisfying such a condition is preferable from the viewpoint of excellent compatibility with the polymer (A), and excellent handleability and mechanical properties of the curable composition. The number average molecular weight (Mn) is measured by a GPC method.

The glass transition temperature (Tg) of the polymer (B) is usually -20°C or lower, preferably -30 to -90°C, and more preferably -40 to -85°C. Such an embodiment is preferable from the viewpoint of excellent mechanical properties at low temperatures. The Tg is determined by differential scanning calorimetry (DSC).

The details of measurement conditions for GPC and DSC will be described later in Examples.

The viscosity of the polymer (B) at a number of revolutions of 1 rpm measured, under the condition of a liquid temperature of 25°C, using a type E viscometer is usually 150 Pa·s or less, and preferably 100 Pa·s or less. The lower limit value of the viscosity is not particularly limited, but is 0.5 Pa·s in one embodiment.

By using the polymer (B) together with the polymer (A), a curable composition having excellent coatability can be obtained, and a cured product having excellent mechanical properties and weatherability can be obtained.

In one embodiment, the polymer (B) preferably has a group represented by the formula (2) at the molecular end of a polymer, and more preferably has a group represented by the formula (2) at the molecular end of a polyether polymer.

The polymer (B) can be obtained, for example, by reacting a terminal hydroxyl group of a polyether polymer with an isocyanate group of a compound represented by OCN-R^{B}-SiR²₃ (R² and R^{B} have the same meaning as the same symbols in the formula (2)).

The polymer (B) can also be obtained by obtaining a terminal isocyanate group-containing polyether polymer from a polyether polymer and reacting a terminal isocyanate group of the polymer with an amino group of a compound represented by R⁴NH-R^{B}-SiR²₃ (R², R⁴, and R^{B} have the same meaning as the same symbols described in the formula (2)). The terminal isocyanate group-containing polyether polymer can be obtained, for example, by urethane reaction between a polyether polymer having a terminal hydroxyl group and a diisocyanate compound. Such a polyether polymer has a urethane skeleton between polyether skeletons.

The polymer (B) can also be obtained by obtaining a terminal amino group-containing polyether polymer from a polyether polymer and reacting a terminal amino group of the polymer with an isocyanate group of a compound represented by OCN-R^{B}-SiR²₃ (R² and R^{B} have the same meaning as the same symbols in the formula (2)).

Examples of the compound represented by OCN-R^{B}-SiR²₃ include 1-isocyanatomethyldimethylmethoxysilane, 1-isocyanatomethyldimethylethoxysilane, 1-isocyanatomethylmethyldimethoxysilane, 1-isocyanatomethylmethyldiethoxysilane, 1-isocyanatomethyltrimethoxysilane, 1-isocyanatomethyltriethoxysilane, 3-isocyanatopropyldimethylmethoxysilane, 3-isocyanatopropyldimethylethoxysilane, 3-isocyanatopropylmethyldimethoxysilane, 3-isocyanatopropylmethyldiethoxysilane, 3-isocyanatopropyltrimethoxysilane, and 3-isocyanatopropyltriethoxysilane.

Examples of the compound represented by R⁴NH-R^{B}-SiR²₃ include N-ethylaminoisobutyldimethylmethoxysilane, N-ethylaminoisobutyldimethylethoxysilane, N-ethylaminoisobutylmethyldimethoxysilane, N-ethylaminoisobutylmethyldiethoxysilane, N-ethylaminoisobutyltrimethoxysilane, N-ethylaminoisobutyltriethoxysilane, 3-aminopropyldimethylmethoxysilane, 3-aminopropyldimethylethoxysilane, 3-aminopropylmethyldimethoxysilane, 3-aminopropylmethyldiethoxysilane, 3-aminopropyltrimethoxysilane, and 3-aminopropyltriethoxysilane.

Examples of the diisocyanate compound include:
aliphatic diisocyanates with 4 to 30 carbon atoms, such as ethylene diisocyanate, tetramethylene diisocyanate, pentamethylene diisocyanate, hexamethylene diisocyanate, 2-methyl-1,5-pentane diisocyanate, 3-methyl-1,5-pentane diisocyanate, and 2,2,4-trimethyl-1,6-hexamethylene diisocyanate;
alicyclic diisocyanates with 7 to 30 carbon atoms, such as isophorone diisocyanate, cyclopentyl diisocyanate, cyclohexyl diisocyanate, hydrogenated xylylene diisocyanate, hydrogenated tolylene diisocyanate, hydrogenated diphenylmethane diisocyanate, and hydrogenated tetramethylxylylene diisocyanate; and
aromatic diisocyanates with 8 to 30 carbon atoms, such as phenylene diisocyanate, tolylene diisocyanate, xylylene diisocyanate, naphthylene diisocyanate, diphenyl ether diisocyanate, diphenylmethane diisocyanate, and diphenylpropane diisocyanate.

The composition of the present invention can contain one or two or more polymers (B).

The content of the polymer (B) in the composition of the present invention is preferably 40 to 250 parts by mass, more preferably 50 to 200 parts by mass, and still more preferably 60 to 150 parts by mass, relative to 100 parts by mass of the polymer (A). Such an embodiment is preferable from the viewpoint of compatibility and viscosity.

### [Other components]

The composition of the present invention can contain in addition to the polymer (A) and the polymer (B), as necessary, one or two or more other components, for example, a plasticizer, a filler, silica, a pigment, an anti-aging agent, a dehydrating agent, an amino silane coupling agent, a curing catalyst, a viscosifying agent, a dispersing agent, a leveling agent, an antifoaming agent, and an adhesion promotor.

### <Plasticizer>

The composition of the present invention can further contain a plasticizer. By using the plasticizer, it is possible to improve flexibility and elongation properties of a cured product formed from the curable composition.

Examples of the plasticizer include phthalic acid esters, such as dimethyl phthalate, diethyl phthalate, dibutyl phthalate, diisobutyl phthalate, dioctyl phthalate, diisodecyl phthalate, butylbenzyl phthalate, and diisononyl phthalate; aliphatic carboxylic acid esters, such as dioctyl adipate, diisodecyl succinate, dibutyl sebacate, and butyl oleate; alcohol esters, such as diethylene glycol dibenzoate, triethylene glycol dibenzoate, and pentaerythritol ester; phosphoric acid esters, such as trioctyl phosphate and tricresyl phosphate; epoxy plasticizers, such as epoxidized soybean oil, dioctyl 4,5-epoxyhexahydrophthalate, and benzyl epoxystearate; chlorinated paraffin; hydrocarbons, such as normal paraffin and isoparaffin; polyethylene glycol and derivatives thereof, polypropylene glycol and derivatives thereof, e.g., polyethers in which the hydroxyl group of polyethylene glycol or polypropylene glycol is sealed with an alkyl ether, oligomers of polystyrene such as poly-alphamethylstyrene and polystyrene, oligomers such as polybutadiene, butadiene-acrylonitrile copolymers, polychloroprene, polyisoprene, polybutene, hydrogenated polybutene, and epoxidized polybutadiene, and polymer plasticizers such as (meth)acrylic polymers other than the polymer (A).

One or two or more plasticizers can be used.

In one embodiment, from the viewpoint of coatability of the curable composition and weatherability of a cured product, the content of the plasticizer in the composition of the present invention is preferably 10 to 200 parts by mass, more preferably 50 to 150 parts by mass, relative to 100 parts by mass of the total of the polymer (A) and the polymer (B) .

### <Filler>

The composition of the present invention can further contain a filler.

Examples of the filler include calcium carbonates, such as heavy calcium carbonate, light calcium carbonate, colloidal calcium carbonate, semi-colloidal calcium carbonate, ultrafine calcium carbonate, and these calcium carbonates whose surfaces are surface-treated with a fatty acid or resin acid-based organic substance; carbon black; magnesium carbonate; diatomite; calcined clay; clay; talc; titanium oxide; bentonite; ferric oxide; zinc oxide; active zinc white; inorganic hollow bodies, such as shirasu balloons, perlite, glass balloons, fly ash balloons, alumina balloons, zirconia balloons, and carbon balloons; organic resin hollow bodies, such as phenolic resin balloons, epoxy resin balloons, urea resin balloons, polyvinylidene chloride resin balloons, polyvinylidene chloride-(meth)acrylic resin balloons, polystyrene balloons, polymethacrylate balloons, polyvinyl alcohol balloons, styrene-(meth)acrylic resin balloons, and polyacrylonitrile balloons; powdery fillers, such as resin beads, wood flour, pulp, cotton chips, mica, walnut shell flour, rice hull flour, graphite, aluminum fine powder, and flint powder; and fibrous fillers, such as glass fibers, glass filaments, carbon fibers, Kevlar fibers, and polyethylene fibers. Among these, calcium carbonates are preferable.

One or two or more fillers can be used.

In one embodiment, the content of the filler in the composition of the present invention is preferably 10 to 800 parts by mass, more preferably 50 to 400 parts by mass, relative to 100 parts by mass of the total of the polymer (A) and the polymer (B). In the present invention, it is possible to obtain a curable composition having excellent filler dispersibility.

<Silica>

The composition of the present invention can further contain silica. By using silica, coatability of the curable composition is improved, and it is possible to obtain a cured product having excellent weatherability and elongation properties.

An example of silica is fumed silica. Other examples of silica include hydrophobic silica and hydrophilic silica, and hydrophobic silica is preferable.

One or two or more types of silica can be used.

In one embodiment, the content of silica in the composition of the present invention is preferably 1 to 100 parts by mass, more preferably 3 to 50 parts by mass, relative to 100 parts by mass of the total of the polymer (A) and the polymer (B).

### <Pigment>

The composition of the present invention can further contain a pigment.

Examples of the pigment include inorganic pigments, such as iron oxide, chromium oxide, titanium oxide, and cobalt aluminate; and organic pigments, such as phthalocyanine blue and phthalocyanine green. Use of the pigment is preferable from the viewpoint of improving toning and weatherability.

One or two or more pigments can be used.

In one embodiment, the content of the pigment in the composition of the present invention is preferably 1 to 400 parts by mass, more preferably 3 to 200 parts by mass, relative to 100 parts by mass of the total of the polymer (A) and the polymer (B).

### <Anti-aging agent>

The composition of the present invention can further contain an anti-aging agent, such as an ultraviolet absorber, a light stabilizer, and an antioxidant.

Examples of the ultraviolet absorber include a benzotriazole-based ultraviolet absorber and a benzophenone-based ultraviolet absorber, and a benzotriazole-based ultraviolet absorber is preferable. Examples of the benzotriazole-based ultraviolet absorber include 2-(2-hydroxy-5-tert-butylphenyl)-2H-benzotriazole, 2-(2H-benzotriazol-2-yl)-4,6-bis(1-methyl-1-phenylethyl)phenol, 2-(2H-benzotriazol-2-yl)-6-(1-methyl-1-phenylethyl)-4-(1,1,3,3-tetramethylbutyl)phenol, a reaction product of methyl 3-(3-(2H-benzotriazol-2-yl)-5-tert-butyl-4-hydroxyphenyl)propionate and polyethylene glycol, and 2-(2H-benzotriazol-2-yl)-p-cresol.

Examples of the light stabilizer include a hindered amine-based light stabilizer. Examples of the hindered amine-based light stabilizer include bis(1,2,2,6,6-pentamethyl-4-piperidyl) sebacate, methyl(1,2,2,6,6-pentamethyl-4-piperidyl) sebacate, decanedioic acid bis(2,2,6,6-tetramethyl-1-(octyloxy)-4-piperidinyl)ester, bis(1,2,2,6,6-pentamethyl-4-piperidinyl) sebacate, and 2,4-bis[N-butyl-N-(1-cyclohexyloxy-2,2,6,6-tetramethylpiperidin-4-yl)amino]-6-(2-hydroxyethylamine)-1,3,5-triazine).

Examples of the antioxidant include a hindered phenol-based antioxidant, a monophenol-based antioxidant, a bisphenol-based antioxidant, a polyphenol-based antioxidant, and a phosphorus-based antioxidant.

One or two or more anti-aging agents can be used.

In one embodiment, the content of the anti-aging agent in the composition of the present invention is preferably 0.05 to 20 parts by mass, more preferably 0.1 to 10 parts by mass, relative to 100 parts by mass of the total of the polymer (A) and the polymer (B).

### <Dehydrating agent>

In order to further improve storage stability, the composition of the present invention can contain a small amount of a dehydrating agent within a range that does not adversely affect curability and flexibility.

Examples of the dehydrating agent include hydrolyzable organosilicon compounds, such as methyltrimethoxysilane, methyltriethoxysilane, tetramethoxysilane, tetraethoxysilane, dimethyldimethoxysilane, phenyltrimethoxysilane, diphenyldimethoxysilane, and vinyltrimethoxysilane; alkyl orthoformates, such as methyl orthoformate and ethyl orthoformate; alkyl orthoacetates, such as methyl orthoacetate and ethyl orthoacetate; and isocyanate compounds, such as p-toluenesulfonyl isocyanate.

In one embodiment, from the viewpoint of storage stability and curability of the curable composition, the content of the dehydrating agent in the composition of the present invention is preferably 0.1 to 20 parts by mass, more preferably 1 to 10 parts by mass, relative to 100 parts by mass of the total of the polymer (A) and the polymer (B).

### <Amino silane coupling agent>

The composition of the present invention can further contain an amino silane coupling agent.

The amino silane coupling agent means a compound having, in one molecule, a silicon atom bonded to an alkoxy group and a functional group containing a nitrogen atom. The amino silane coupling agent serves as a catalytic promoter that promotes moisture curing and further can improve adhesion of the resulting cured product.

Examples of the amino silane coupling agent include 3-aminopropyltrimethoxysilane, 3-aminopropylmethyldimethoxysilane, 3-aminopropyltriethoxysilane, N-(2-aminoethyl)-aminomethyltrimethoxysilane, N-(2-aminoethyl)-aminomethyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine, and N,N'-bis-[3-(triethoxysilyl)propyl]hexamethylenediamine.

One or two or more amino silane coupling agents can be used.

In one embodiment, from the viewpoint of adhesion, storage stability, and handleability of the curable composition, the content of the amino silane coupling agent in the composition of the present invention is preferably 0.1 to 20 parts by mass, more preferably 1 to 10 parts by mass, relative to 100 parts by mass of the total of the polymer (A) and the polymer (B).

### <Curing catalyst>

In order to improve the curing rate, the composition of the present invention can contain a curing catalyst.

Examples of the curing catalyst include tin compounds, such as tin dioctoate, tin neodecanoate, tin stearate, dibutyltin dioleylmaleate, dibutyltin butylmaleate, dibutyltin distearate, dibutyltin dilaurate, dibutyltin diacetate, dibutyltin diacetylacetonate, dibutyltin neodecanoate, dibutyltin oxide, dibutyltin bis(triethoxysilicate), dibutyltin bisisooctylthioglycolate, dioctyltin distearate, dioctyltin oxide, dioctyltin dilaurate, dioctyltin diacetate, dioctyltin dineodecanoate, dioctyltin bis(ethylmaleate), dioctyltin bis(octylmaleate), and dioctyltin bisisooctylthioglycolate; bismuth compounds, such as bismuth tris(2-ethylhexanoate); and titanium compounds, such as alkyl titanates and organosilicon titanates.

One or two or more curing catalysts can be used.

In one embodiment, from the viewpoint of adhesion, storage stability, and handleability of the curable composition, the content of the curing catalyst in the composition of the present invention is preferably 0.01 to 5 parts by mass, more preferably 0.05 to 3 parts by mass, relative to 100 parts by mass of the total of the polymer (A) and the polymer (B).

### [Application of curable composition, cured product]

The composition of the present invention has excellent storage stability because of good compatibility between the polymer (A) and the polymer (B) and also has excellent coatability due to its high thixotropy. Furthermore, a cured product obtained from the composition has excellent mechanical properties such as elongation at break and breaking strength and excellent weatherability.

The composition of the present invention has good crosslinkability and therefore can be used for, for example, application where it is cured by crosslinking or application where elasticity of a cured body is utilized. In the composition, it is considered that, for example, the group represented by the formula (1) of the polymer (A) and the group represented by the formula (2) of the polymer (B) are hydrolyzed by moisture present in the atmosphere or in an adherend to which the curable composition is applied to form silanol groups, and then silanol groups undergo dehydration condensation to form siloxane bonds, resulting in curing to form a cured product.

The composition of the present invention is suitably used, for example, as sealing materials, adhesives, or paint in the construction/building material application and in the automobile application. Other examples of application of the composition of the present invention include coating materials for covering surfaces of inorganic materials (e.g., cement, mortar, metal, and glass), compositions for forming sheets (examples of sheets: air-permeable sheets, protective sheets, water-impermeable sheets, damping sheets, transfer sheets, dimming sheets, antistatic sheets, conductive sheets, curing sheets, sound-insulating sheets, light-shielding sheets, decorative sheets, marking sheets, and flame-retardant sheets), compositions for forming films (examples of films: marking films, protective films, ink fixing films, and laminate films), compositions for forming foams (examples of foams: rigid foams, flexible foams, semi-rigid foams, and flame-retardant foams), damping materials, sound-insulating materials, soundproof materials, sound-absorbing materials, artificial leather, artificial skin, synthetic leather, various industrial parts, daily necessities, compositions for forming molded articles for toiletries, vehicles for paint, resins for primers, and various binders (e.g., binders for ink, binders for magnetic recording media, binders for casting, binders for fired products, and binders for glass fiber sizing materials).

The composition of the present invention has good crosslinkability and therefore is particularly suitably used as a composition for forming sealing materials. Furthermore, in order to improve working efficiency, a composition for forming sealing materials is required to have good pot life and low viscosity, and after curing, is required to have flexibility and elongation properties so as to follow joints that expand and contract due to changes in the temperature outside. The composition of the present invention can have such properties. Furthermore, a sealing material including the composition of the present invention has also excellent mechanical strength.

A cured product of the present invention is obtained from a composition of the present invention. Although curing conditions are not particularly limited, when the composition of the present invention is applied onto a support and, for example, left to stand under the environment of 10 to 80°C and 20 to 90% RH, preferably under the environment of 20 to 70°C and 30 to 80% RH, for a predetermined time, curing can be carried out satisfactorily.

### EXAMPLES

The present invention will be described in more detail below on the basis of Examples. However, the present invention is not limited to these examples. In the following descriptions, for example, in Examples and Comparative Examples, "part" refers to "part by mass" unless otherwise noted.

### [Measurement methods for polymers]

Measurement methods of properties of polymers will be described below.

### <Number average molecular weight>

The number average molecular weight (Mn) of each polymer was analyzed by a gel permeation chromatography (GPC) method and calculated in terms of polystyrene under the following conditions.
- Apparatus: GPC-8220 (manufactured by Tosoh Corporation)
- Column: G7000HXL/7.8 mm ID × 1 piece + GMHXL/7.8 mm ID × 2 pieces + G2500HXL/7.8 mm ID × 1 piece
- Medium: tetrahydrofuran
- Flow rate: 1.0 mL/min
- Concentration: 1.5 mg/mL
- Injection volume: 300 micro L
- Column temperature: 40°C

### <Glass transition temperature (Tg)>

The glass transition temperature (Tg) of each polymer was measured with a differential scanning calorimeter (DSC).
- Apparatus: DSC7000X (manufactured by Hitachi High-Tech Science Corporation)
- Temperature conditions: raised from -80°C to 30°C at 10°C/min
- Sample container: open cell made of aluminum • Amount of sample: 5 mg

### <Viscosity>

The viscosity of each polymer at a number of revolutions of 1 rpm was measured, under the condition of a liquid temperature of 25°C, using a type E viscometer VISCONIC EHD (manufactured by Tokyo Keiki Inc).

### [Production Example A1]

Into a flask equipped with a stirrer, a nitrogen gas introduction tube, a thermometer, and a reflux condenser tube were charged 49.6 parts of lauryl acrylate, 49.6 parts of n-butyl acrylate, and 0.8 parts of 3-methacryloxypropylmethyldimethoxysilane (KBM-502, manufactured by Shin-Etsu Chemical Co., Ltd). Nitrogen purge was performed by stirring for 30 minutes while introducing nitrogen gas into the flask, and then the contents in the flask were heated to 90°C. Next, while maintaining the contents in the flask at 90°C, 0.7 parts of 3-mercaptopropylmethyldimethoxysilane (KBM-802, manufactured by Shin-Etsu Chemical Co., Ltd.) was added thereto, and after stirring for 30 minutes, 0.05 parts of 2,2'-azobisisobutyronitrile (AIBN) was added. Thirty minutes after first addition of AIBN, 0.05 parts of AIBN was further added. Thirty minutes after second addition of AIBN, 0.05 parts of AIBN was further added, and the contents were maintained at 90°C for 2 hours. Subsequently, volatile components in the reaction mixture were distilled off under reduced pressure, and a (meth)acrylic polymer (A-1) was obtained. The polymer (A-1) had an Mn of 25,000, a viscosity of 155 Pa·s, and a Tg of -54°C.

### [Production Examples A2 to A7 and cA1 to cA3]

(Meth)acrylic polymers (A-2) to (A-7) and (cA-1) to (cA-3) were obtained as in Production Example A1 except that the starting components used were changed as shown in Table 1.

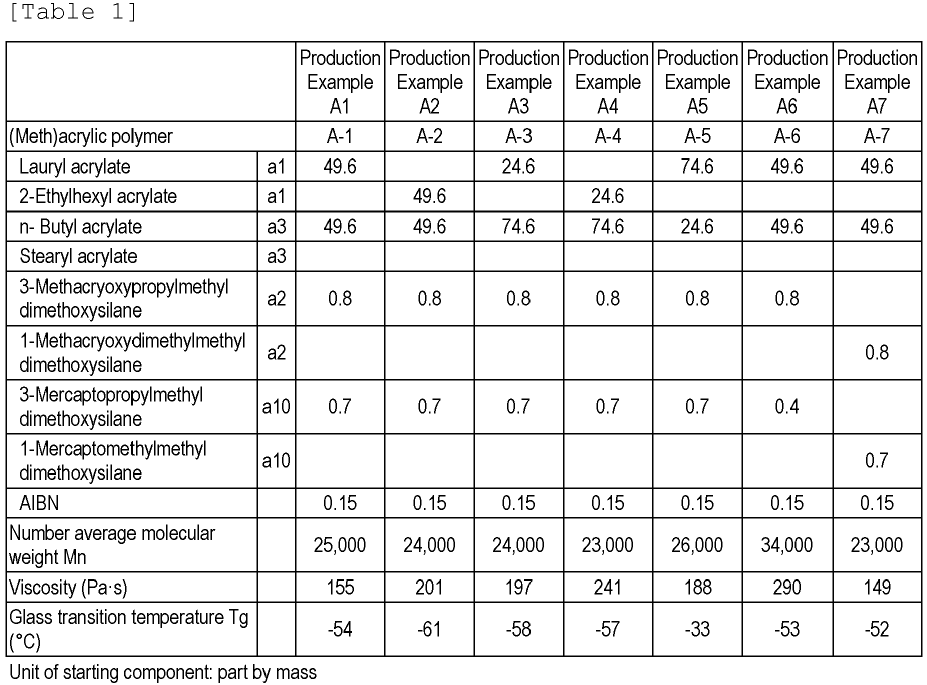

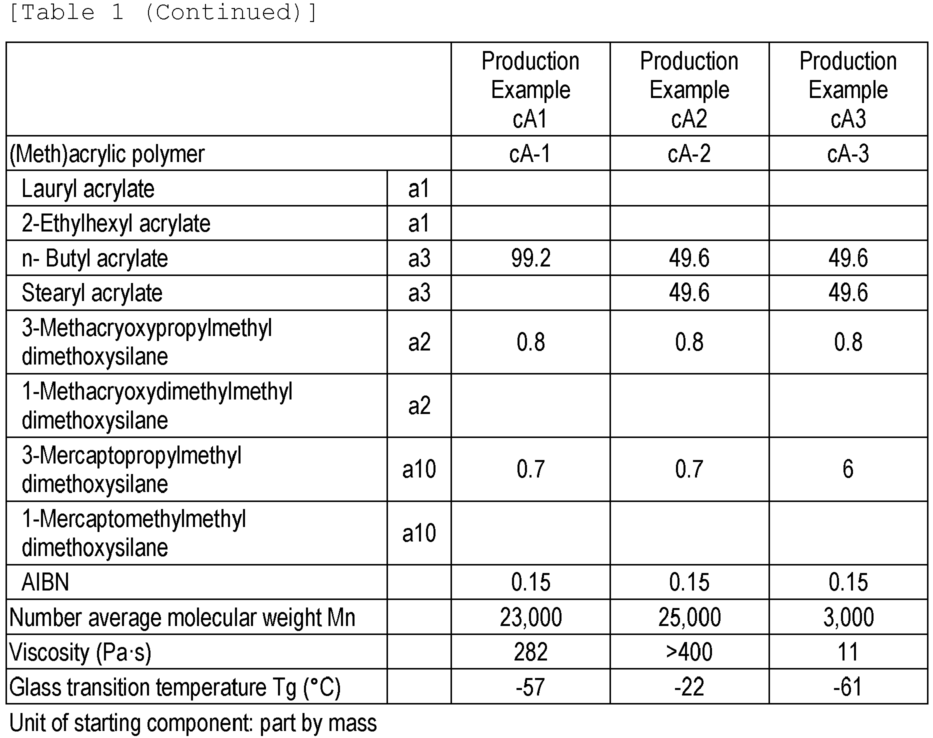

### [Production Example B1]

2 Parts of propylene oxide was charged into a flask equipped with a stirrer, a nitrogen gas introduction tube, a thermometer, and a reflux condenser tube. Nitrogen purge was performed by stirring for 30 minutes while introducing nitrogen gas into the flask. The temperature was raised to 120°C, and while maintaining the contents in the flask at 120°C, 20 parts of polypropylene glycol (SANNIX PP-4000, manufactured by Sanyo Chemical Industries, Ltd.) and 0.006 parts of a composite metal cyanide complex catalyst were charged into the flask, and a reaction was started. After 5 minutes from the start of reaction, while maintaining the contents in the flask at 120°C, 98 parts of polypropylene glycol was added dropwise at constant speed over a period of 4 hours, and then a reaction was carried out at 120°C for 2 hours. Volatile components in the reaction mixture were distilled off under reduced pressure to thereby obtain polypropylene glycol (B'-1) having hydroxyl groups at both ends. The polypropylene glycol (B'-1) had an Mn of 27,000.

100 Parts of polypropylene glycol (B'-1) was charged into a flask equipped with a stirrer, a nitrogen gas introduction tube, a thermometer, and a reflux condenser tube, and while maintaining the contents in the flask at 110°C, dehydration under reduced pressure was performed. Next, the temperature inside the flask was maintained at 50°C while introducing nitrogen gas into the flask, and 0.005 parts of NACEM Zinc (manufactured by Nihon Kagaku Sangyo Co., Ltd.) serving as a urethane-forming catalyst was added thereinto, followed by stirring. Then, 1-isocyanatomethylmethyldimethoxysilane was charged such that the ratio of the total number of isocyanate groups to the total number of hydroxyl groups of the polypropylene glycol (B'-1) was 0.97. Next, the temperature inside the flask was maintained at 80°C for 8 hours, and it was confirmed by FT-IR that the peak of the isocyanate group had disappeared. Then, cooling was performed to reach 25°C, and volatile components were distilled off under reduced pressure to thereby obtain a polymer (B-1) having a methyldimethoxysilyl group at an end. The polymer (B-1) had an Mn of 28,000, a viscosity of 31 Pa·s, and a Tg of -68°C.

### [Production Example B2]

A polymer (B-2) having a methyldimethoxysilyl group at an end was obtained as in Production Example B1 except that 3-isocyanatopropylmethyldimethoxysilane was used as an isocyanate compound to be reacted with hydroxyl groups of polypropylene glycol (B'-1). The polymer (B-2) had an Mn of 27,000, a viscosity of 30 Pa·s, and a Tg of -67°C.

### [Production Example B3]

100 Parts of polypropylene glycol (B'-1) was charged into a flask equipped with a stirrer, a nitrogen gas introduction tube, a thermometer, and a reflux condenser tube, and while maintaining the contents in the flask at 110°C, dehydration under reduced pressure was performed. Next, 0.5 parts of a hindered phenol-based antioxidant (Irganox 1135, manufactured by BASF Japan) and 0.05 parts of tetraisopropyl titanate (ORGATIX TA-8, manufactured by Matsumoto Fine Chemical Co., Ltd.) were charged, and the temperature inside the flask was maintained at 80°C while introducing nitrogen gas into the flask. Next, 2.1 parts of isophorone diisocyanate was added thereinto, and a reaction was carried out for 6 hours. Then, 2.1 parts of N-ethylaminoisobutyltrimethoxysilane was added thereinto, the temperature inside the flask was maintained at 80°C for 8 hours, and it was confirmed by FT-IR that the peak of the isocyanate group had disappeared. Then, cooling was performed to reach 25°C, and volatile components were distilled off under reduced pressure to thereby obtain a polymer (B-3) having a trimethoxysilyl group at an end. The polymer (B-3) had an Mn of 31,000, a viscosity of 49 Pa·s, and a Tg of -63°C.

### [Example 1]

50 Parts of the (meth)acrylic polymer (A-1), 50 parts of the polymer (B-1), and 100 parts of a plasticizer (ARUFON UP-1000, manufactured by Toagosei Co., Ltd.) were mixed with a planetary centrifugal mixer (ARE-310, manufactured by THINKY Corporation) at a revolution speed of 2,000 rpm for one minute. Next, 87.2 parts of light calcium carbonate (Hakuenka CCR, manufactured by Shiraishi Kogyo Kaisha, Ltd.; filler), 87.2 parts of heavy calcium carbonate (Whiton 305, manufactured by Shiraishi Kogyo Kaisha, Ltd.; filler), 8 parts of silica (HDK H18, manufactured by Wacker Asahikasei Silicone), 8 parts of a white pigment (TIPAQUE PFC105, manufactured by Ishihara Sangyo Kaisha, Ltd.), 0.7 parts of an ultraviolet absorber (Tinuvin 1130, manufactured by BASF), 0.7 parts of a light stabilizer (Tinuvin 292, manufactured by BASF), 8 parts of a dehydrating agent (Silquest A-171, manufactured by Momentive), 4 parts of a catalytic promoter (Silquest A-1122, manufactured by Momentive), and 0.3 parts of a catalyst (NEOSTANN U-220H, manufactured by Nitto Kasei) were mixed with the ARE-310 at a revolution speed of 2,000 rpm for 2 minutes to thereby obtain a curable composition.

Various evaluations were performed on the resulting curable composition.

### [Examples 2 to 12, Comparative Examples 1 to 5]

Curable compositions were obtained as in Example 1 except that compounding components were changed as shown in Table 2, and various evaluations were performed.

### [Evaluation methods for curable compositions]

Evaluation methods for properties of the curable compositions will be described below.

### <Compatibility>

The principal components obtained at the volume ratio shown in Table 2 were placed in a container. After mixing with an ARE-310 at a revolution speed of 2,000 rpm for one minute, the mixture was left to stand in an environment at - 20°C for 2,000 hours, and evaluation was performed visually on the basis of the following criteria:
AA: Phase separation was not confirmed even over 2,000 hours after standing.
BB: Phase separation was confirmed over 1,000 hours and within 2,000 hours after standing.
CC: Phase separation was confirmed within 1,000 hours after standing.

### <Viscosity>

For the curable compositions obtained in Examples and Comparative Examples, using a type E viscometer VISCONIC EHD (manufactured by Tokyo Keiki Inc.), the viscosity at 1 rpm or 10 rpm was measured at 25°C in accordance with JIS K1557. Furthermore, the TI Value was obtained by dividing the viscosity at 1 rpm by the viscosity at 10 rpm.

### <Dispersibility>

The curable compositions obtained in Examples and Comparative Examples were each applied to a grind gauge with a groove depth of 0 to 25 micrometers (manufactured by Daiichi Sokuhan Works Co.) with a scraper, and evaluation was performed visually on the basis of the following criteria:
AA: Filler concentration is confirmed at less than 5 micrometers.
BB: Filler concentration is confirmed at 5 to 10 micrometers.
CC: Filler concentration is confirmed at more than 10 micrometers.

### <Tack-free time>

The curable compositions obtained in Examples and Comparative Examples were each applied with a doctor blade onto a Teflon (registered trademark) sheet so that the thickness of the cured product layer was 2 mm, and the time from the start of curing under the conditions of 23°C/50% RH to a point when adhesion of the composition (cured product) to a SUS spatula was not confirmed was measured.

### <Tensile properties>

The curable compositions obtained in Examples and Comparative Examples were each applied with a doctor blade onto a Teflon (registered trademark) sheet so that the thickness of the cured product layer was 2 mm and cured under the conditions of 23°C/50% RH for 7 days. Then, the resulting cured product was punched out into a JIS No. 3 dumbbell shape, thus producing a sample. By performing a tensile test on the resulting sample in accordance with JIS K6251:2010 (Rubber, vulcanized or thermoplastic - determination of tensile properties) under the conditions of a tensile speed of 200 mm/min and 23°C, 50% modulus, stress at break, and elongation were measured.

### <Probe tack>

For the samples obtained by the same method as that of tensile properties, using a probe tack tester TE6001 (manufactured by Tester Sangyo Co., Ltd.), the probe tack value was measured under the following conditions:
- Measurement environment: under the environment of 23°C/50% RH
- Contact area: 0.2 cm²
- Measurement pressure: 100 g/cm²
- Contact time: 1.0 second
- Peeling rate: 1.0 cm/s

### <Weatherability>

Using the samples obtained by the same method as that of tensile properties, a test was carried out with a super xenon weather meter SX75 (manufactured by Suga Test Instruments Co., Ltd.) under the following conditions for 2,000 hours. In the evaluation after the weatherability test, the quantity of cracks (Q) and the width of cracks (W) described in JIS A1439 were measured.
- Testing environment: 63±3°C, 50±5% RH
- Irradiation intensity 180 W/cm²
- 18-minute water sprinkling was repeated during 2 hours.

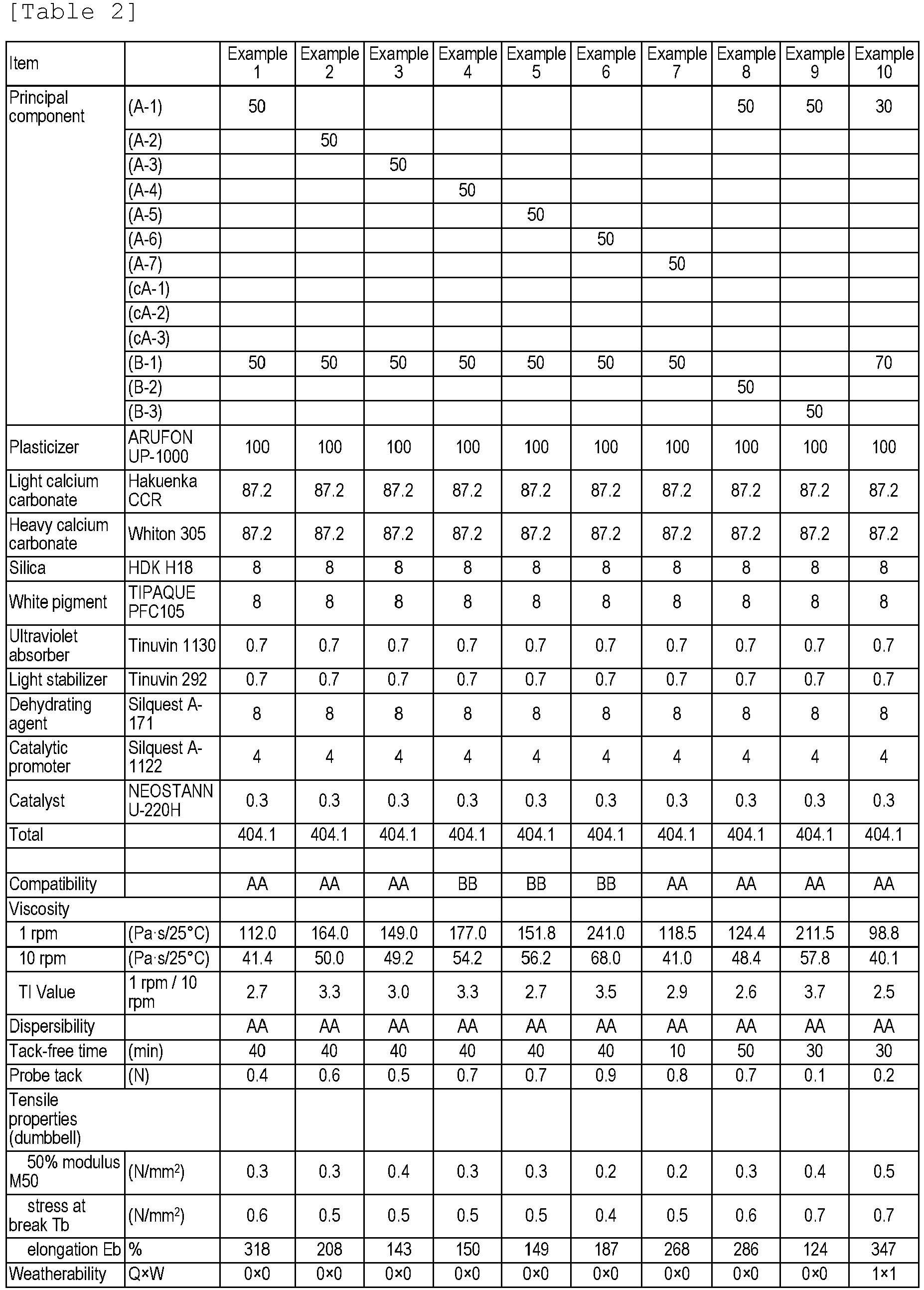

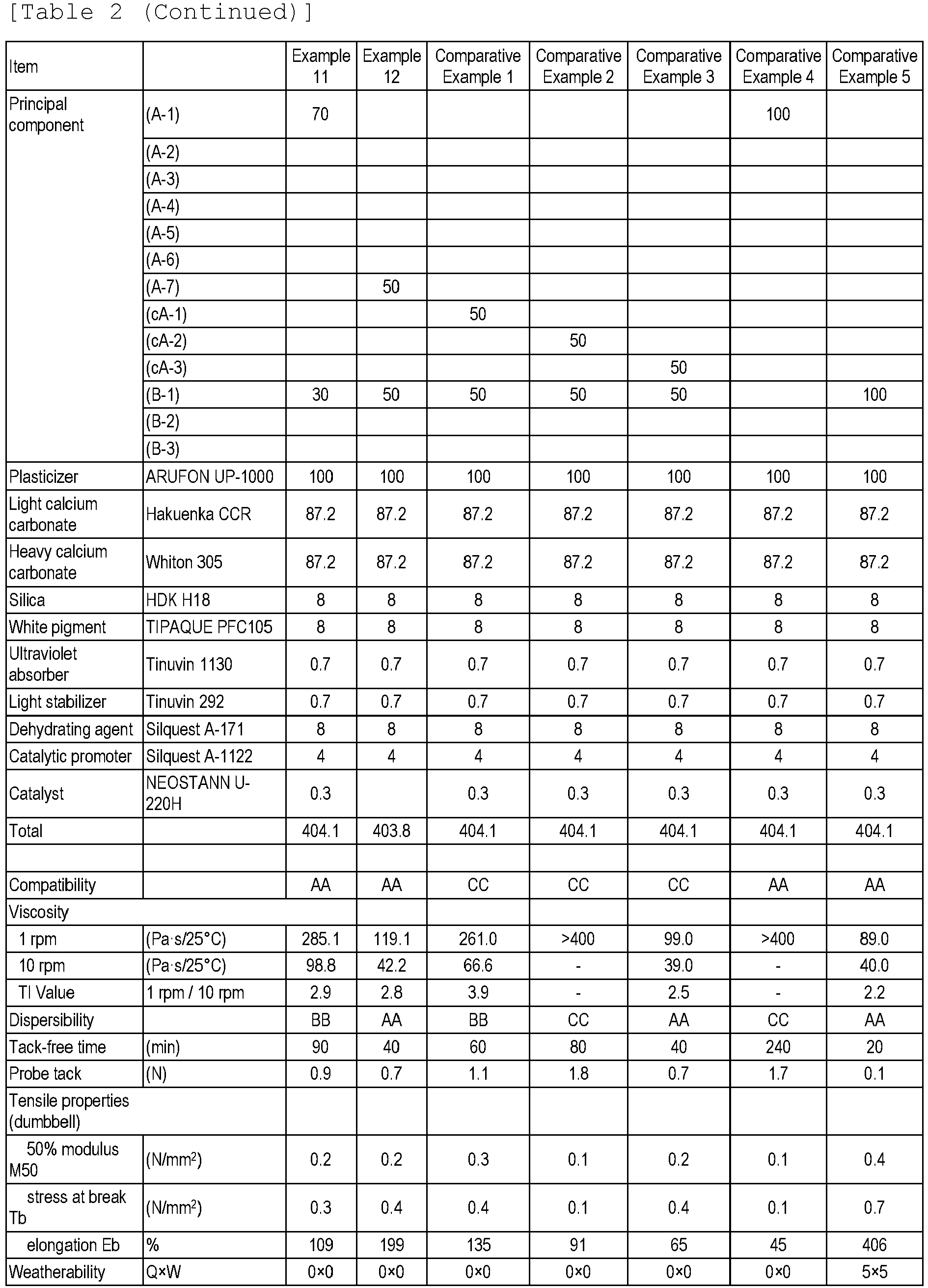

## Claims

1. A curable composition comprising:
a (meth)acrylic polymer (A) which is a polymer of starting components including a polymerizable monomer containing 20% by mass or more of a (meth)acrylic acid alkyl ester (a1) having an alkyl group with 8 to 12 carbon atoms, and a mercapto group-containing compound (a10) having a group represented by the formula (1) below in an amount of 0.1 to 5 parts by mass relative to 100 parts by mass of the polymerizable monomer; and
a polymer (B) having a group represented by the formula (2) below and having a polyether skeleton in the main chain thereof:
Formula (1): -SiR¹₃
[in the formula (1), R¹ is each independently an alkyl group with 1 to 20 carbon atoms, alkoxy group with 1 to 20 carbon atoms, or hydroxyl group, and at least one R¹ is the alkoxy group or hydroxyl group], and
Formula (2): -W-R^{B}-SiR²₃
[in the formula (2), R² is each independently an alkyl group with 1 to 20 carbon atoms, alkoxy group with 1 to 20 carbon atoms, or hydroxyl group, and at least one R² is the alkoxy group or hydroxyl group; R^{B} is an alkanediyl group with 1 to 4 carbon atoms; W is a divalent group represented by -O-CO-NH- or -N(R³)-CO-N(R⁴)-; R³ and R⁴ are each a hydrogen atom, hydrocarbon group, or halogenated hydrocarbon group, and R³ and R⁴ may be the same or different].

2. The curable composition according to Claim 1, wherein the polymerizable monomer in the (meth)acrylic polymer (A) contains 20 to 99% by mass of the (meth)acrylic acid alkyl ester (a1) and 0.01 to 10% by mass of a (meth)acryloyl group-containing compound (a2) having a group represented by the formula (1).

3. The curable composition according to Claim 1 or 2, wherein the (meth)acrylic polymer (A) has a number average molecular weight (Mn) of 10,000 to 50,000 and a glass transition temperature (Tg) of -20°C or lower.

4. The curable composition according to any one of Claims 1 to 3, wherein the curable composition contains the polymer (B) in an amount of 40 to 250 parts by mass relative to 100 parts by mass of the (meth)acrylic polymer (A).

5. A cured product obtained from the curable composition according to any one of Claims 1 to 4.
